# EUROPÄISCHE PATENTSCHRIFT

(11) **EP 2 545 761 B1**
(45) Veröffentlichungstag und Bekanntmachung des Hinweises auf die Patenterteilung: **28.12.2016**
(21) Anmeldenummer: 12166959.2
(22) Anmeldetag: 07.05.2012
(51) Int. Cl.: A01D 41/14, A01D 41/127

(54) **Verfahren zum Betreiben einer selbstfahrenden Erntemaschine**
Method for operating a self-propelled harvester
Procédé de fonctionnement d'une moissonneuse automobile

(30) Priorität: 12.07.2011 DE 102011051784
(43) Veröffentlichungstag der Anmeldung: 16.01.2013
(73) Patentinhaber: CLAAS Selbstfahrende Erntemaschinen GmbH, 33428 Harsewinkel (DE)
(72) Erfinder: Behnke, Willi, 33803 Steinhagen (DE); Krause, Thilo, 39249 Glinde (DE)

(56) Entgegenhaltungen:
- EP-A1- 1 709 859
- EP-A1- 1 808 062
- EP-A1- 2 508 057
- DE-A1- 2 224 205
- DE-A1- 19 601 420
- US-A1- 2003 184 747

## Beschreibung

Die Erfindung betrifft ein Verfahren zum Betreiben einer selbstfahrenden Erntemaschine gemäß dem Oberbegriff des Anspruches 1, eine Vorrichtung zur Durchführung des Verfahrens gemäß dem Oberbegriffes des Anspruches 7 sowie eine selbstfahrende Erntemaschine, die mit einer solchen Vorrichtung ausgestattet ist.

Derartige Verfahren unter Verwendung optischer Sensoren zur Vermessung und Überwachung von Ackerflächen sind bekannt.

Aus der nachveröffentlichten EP 2 508 057 A1 ist ein Verfahren zur Überwachung der Befahrbarkeit des Bodens durch eine selbstfahrende landwirtschaftliche Arbeitsmaschine bekannt, die mit einem optischen Sensor ausgestattet ist.

Die EP 1 709 859 A1 beschreibt ein Verfahren und eine Vorrichtung zur Steuerung der Höhe und Neigung eines über einem Untergrund geführten Mähkopfes mittels kontaktlos arbeitender Sensoren.

Die DE 24 22 205 A1 hat eine Seitenführungsregelung für selbstfahrende Maschinen zum Gegenstand. Hierin wird die Spurführung entlang einer Bestandskante beschrieben, indem die Bestandskante optisch durch zwei Lichtschranken abgetastet wird. Eine detektierte Signalunterbrechung wird herangezogen, um die Maschine entsprechend anzusteuern, damit die Spur gehalten wird.

Die DE 196 01 420 A1 beschreibt eine Vorrichtung zur Höhenregelung eines Schneidwerks mit einem Wellensensor, der am Vorsatzgerät angeordnet ist und eine Stellung eines Signalübertragungsgliedes erfasst. Das Signalübertragungsglied ist als Gleitelement, hier als Federstahlbügel, ausgebildet.

Die EP 1 394 530 beschreibt ein Sensorsystem, das auf Brachland eingesetzt werden kann. Das Sensorsystem unterscheidet bei den Messungen im Spektralbereich von 450 bis 950 nm zwischen Grünpflanzen und Boden. Um die Zuverlässigkeit der Messungen zu gewährleisten, werden die Lichtbedingungen dadurch konstant gehalten, dass mindestens eine Licht emittierende Diode (LED) eingesetzt wird. Gemessen wird das jeweils reflektierte Licht. Mit den Ergebnissen kann z.B. über den Einsatz von Unkrautvernichtungsmittel entschieden werden. Diese Lösung unterscheidet nicht zwischen Nutzpflanzen und Unkraut und kann deshalb nicht auf zum Beispiel stehenden Getreidefeldern eingesetzt werden.

Die gattungsgemäße EP 1 808 062 beschreibt eine optische Messvorrichtung an einer selbstfahrenden Erntemaschine. Die Messvorrichtung ist so ausgelegt, dass sie den Chlorophyllgehalt der Pflanzenbestandteile bestimmt und die Ergebnisse zur Weiterverarbeitung wie zum Beispiel für eine Unkrautkartierung weitergibt. Die optische Messeinrichtung ist oberhalb des Vorsatzgerätes der selbstfahrenden Erntemaschine angebracht und beobachtet die Pflanzen unmittelbar vor dem Vorsatzgerät. Diese Messvorrichtung kann zwischen Nutzpflanzen und Unkraut unterscheiden. Die Daten können für eine spätere Nachbehandlung der Ackerfläche und/oder zur Erstellung einer Unkrautkarte herangezogen werden. Diese Messvorrichtung kann lediglich zur Erfassung des Unkrautbestandes herangezogen werden. Eine Aussage über den Gesundheitszustand der Nutzpflanzen ist damit nicht möglich.

Ein anderes optisches Sensorsystem beschreibt die EP 2 143 316. Bei einer selbstfahrenden Erntemaschine wird der Erntegutfluss optisch überwacht, um einen optimalen Betrieb zu ermöglichen und um die Ernteverluste gering zu halten. Eine Kamera oder ein Kamerasystem ist oberhalb des Vorsatzgerätes angebracht, um den Erntegutfluss im Vorsatzgerät zu überwachen, damit gegebenenfalls die Einstellungen des Vorsatzgerätes optimiert oder im Falle einer gravierenden Störung, zum Beispiel die Aufnahme eines Fremdkörpers in Form eines Steines, den Betrieb des Vorsatzgerätes stoppen zu können. Auf die Bodenverhältnisse kann mit diesem Sensorsystem nicht geschlossen werden, da es ausschließlich der Erfassung von Erntegutflussproblemen oder Fremdkörpern innerhalb des Erntegutes im Vorsatzgerät dient.

Nachteilig an den zuvor genannten Sensorsystemen zur Überwachung von bearbeiteten Flächen ist, dass sie jeweils nur dezidierte Parameter messen, die keine Rückschlüsse auf die bearbeitete respektive abgeerntete Fläche zulassen. Eine umfangreiche Kartierung der bearbeiteten Fläche ist nicht vorgesehen.

Der Erfindung liegt die Aufgabe zugrunde, mit wenigen, möglichst einem Sensor eine Vielzahl von Parametern zur Überwachung der bearbeiteten Fläche zu erfassen und sie für eine Auswertung zur Verfügung zu stellen. Zum einen sollen Parameter ermittelt werden, die zur Steuerung der Erntemaschine herangezogen werden, um die Erntegutbergung zu optimieren, zum anderen sollen die erhobenen Daten für eine spätere Auswertung gesammelt werden, um beispielsweise eine Ertrags- und/oder Unkrautkartierung vorzunehmen.

Diese Aufgabe wird erfindungsgemäß durch die kennzeichnenden Merkmale der Ansprüche 1 und 7 gelöst.

Selbstfahrende Erntemaschinen sind beispielsweise Mähdrescher, Feldhäcksler sowie alle anderen selbstfahrenden landwirtschaftlichen Bearbeitungsgeräte. Selbstfahrende Erntemaschinen weisen im Allgemeinen Vorsatzgeräte auf, mit denen das Erntegut aufgenommen und zu dessen weiteren Bearbeitung den Erntemaschinen zugeführt wird. Die Einstellungen dieser Vorsatzgeräte sind im Wesentlichen von den Eigenschaften des Erntegutes sowie von den Bodenverhältnissen der abzuerntenden Fläche abhängig.

Gemäß Anspruch 1 wird vorgeschlagen, dass die bearbeitete Fläche unmittelbar hinter dem Vorsatzgerät und vor den Reifen zumindest abschnittsweise optisch erfasst wird, dass Signale bereitgestellt werden, die die optisch erfasste Fläche repräsentieren, und dass die Signale einer Datenauswertung unterzogen werden, durch welche Rückschlüsse auf die Stoppelqualität im Stoppelbereich des Erntegutes der bearbeiteten Fläche sowie des Erntegutes auf der bearbeiteten Fläche gezogen werden. Auf Grund der Detektion der Beschaffenheit der abgeernteten Fläche unmittelbar hinter dem Vorsatzgerät sind Informationen zur Einstellung der Erntemaschine sowie für nachfolgende Arbeitsschritte nach der Beendigung des Erntevorganges durch die Erntemaschine ableitbar. So können im Zuge des Betreibens der Erntemaschine die Erntegutverluste am Vorsatzgerät reduziert werden, indem die einzelnen Komponenten des Vorsatzgerätes entsprechend aufeinander und in Abhängigkeit von der Bodenbeschaffenheit abgestimmt werden. Ein weiterer Vorteil besteht darin, dass die erfassten und ausgewerteten Daten Rückschlüsse auf die Stoppelqualität zulassen, um daraus Gründe für Mindererträge in Folge von Erkrankungen des Erntegutes erkennen zu können. Ebenfalls können die Informationen über die Stoppelqualität herangezogen werden, um eine angepasste Stoppel- und Bodenbearbeitung durchführen zu können, die Entscheidung für die Frucht- und Sortenfolge abzusichern sowie eine gezielte Schädlingsbekämpfung und Düngung koordinieren zu können.

Insbesondere können die ermittelten Informationen über die bearbeitete Fläche für das Betreiben der selbstfahrenden Erntemaschine herangezogen werden. So können die ermittelten Informationen herangezogen werden, um Arbeitsorgane der selbstfahrenden Erntemaschine wie beispielsweise die Dresch-, Abscheide- sowie Reinigungsvorrichtung eines Mähdreschers optimal auf die aktuellen Erntebedingungen abgestimmt einzustellen.

Weiterhin können die ermittelten Informationen zur Optimierung der Einstellungen des Vorsatzgerätes herangezogen werden. Hierdurch lassen sich Verluste in Folge von ungünstigen Einstellungen des Vorsatzgeräts oder auf Grund von Beschädigungen des Vorsatzgerätes frühzeitig erkennen, um geeignete Maßnahmen zu ergreifen, die zu einer Reduzierung der Verluste beziehungsweise der Vermeidung einer weiteren Beschädigung des Vorsatzgerätes führen.

Vorzugsweise können die aus der Datenauswertung bestimmten Parameter für eine spätere Auswertung gespeichert werden. Die Daten stehen somit für eine externe Auswertung sowie eine spätere rückschauende Betrachtung zur Verfügung, um daraus für zukünftige Ernteprozesse Erkenntnisse ableiten zu können.

Des Weiteren können die aus der Datenauswertung gewonnenen Parameter zur Kartierung der bearbeiteten Fläche herangezogen werden. Auf Basis der Kartierung lassen sich gezielte, örtlich begrenzte Maßnahmen ableiten, wie den Einsatz von Pestiziden oder Fungiziden. Ebenso lässt sich hierdurch das so genannte Precision Farming verbessern, welches bislang auf einer Ertragsermittlung auf der Basis eines Durchschnittswertes bezogen auf die Breite des Vorsatzgerätes beruht. Indem durch die Stoppelüberwachung hinter dem Vorsatzgerät zwischen Bereichen mit Stoppel und ohne Stoppeln differenziert werden kann, lässt sich der Ertrag präziser bestimmten und die Genauigkeit einer Ertragskarte deutlich steigern.

Vorteilhafterweise können die aus der Datenauswertung gewonnenen Parameter über Funk an eine externe Erfassungs- und/oder Auswertestelle weitergegeben werden. Durchgeführt wird dieses Verfahren von einer Vorrichtung an einer selbstfahrenden Erntemaschine zur optischen Bilderfassung und Datenanalyse, die mindestens einen optischen Sensor, der die von dem Erntebergungsvorsatz bearbeitete Fläche unmittelbar hinter dem Vorsatzgerät und vor den Reifen zumindest teilweise optisch erfasst, wobei der mindestens eine Sensor die Stoppel erfasst, und eine Datenanalyseeinheit umfasst, die aus den von dem mindestens einen optischen Sensor erfassten Informationen den Zustand der abgeernteten Fläche repräsentierende Parameter errechnet, die Rückschlüsse auf die Stoppelqualität zulassen.

Da der optische Sensor den Boden hinter dem Vorsatzgerät der selbstfahrenden Erntemaschine zumindest abschnittsweise erfasst, werden die Parameter unmittelbar gewonnen und geben somit die momentane Situation unmittelbar nach dem Abernten des Erntegutes wieder. Somit können die ermittelten Informationen über die bearbeitete Fläche zeitnah für das Betreiben der selbstfahrenden Erntemaschine herangezogen werden, um auf Änderungen schnell reagieren zu können. Ein bevorzugtes Verfahren ist, wenn die ermittelten Informationen zur Optimierung der Einstellungen des Vorsatzgerätes herangezogen werden.

Eine Ausführungsform des optischen Sensors ist eine Kamera; besonders geeignet ist eine Farb-Kamera. Von Vorteil ist eine Kamera, die im Nahinfrarot (NIR) empfindlich ist, da sich mit einer solchen Kamera zusätzliche Analysemöglichkeiten der Pflanzenreste sowie des Bodens ergeben. Beispielsweise kann mit einer NIR-Kamera auf den Wassergehalt von Boden und/oder Pflanzenresten geschlossen werden. Ebenso von Vorteil kann die Verwendung einer 3D-Kamera sein, mit der sich beispielsweise die Länge von Stoppeln genauer bestimmen lässt.

Der optische Sensor wird hinter dem Vorsatzgerät angebracht und beobachtet zumindest einen Teil der gerade abgeernteten Fläche. Eine bevorzugte Position für den mindestens einen optischen Sensor ist, wenn ein Erfassungsbereich des mindestens einen optischen Sensors sich hinter dem Vorsatzgerät und vor den Reifen der selbstfahrenden Erntemaschine befindet. Dort besteht die beste Sicht auf den Boden, die Stoppel und die Arbeitsweise des Vorsatzgerätes. Eine Anordnung des optischen Sensors hinter den Vorderreifen ist ungünstiger, da die Reifen zum Beispiel die Stoppelstruktur verändern.

Vorteilhaft ist es, wenn der Erfassungsbereich von mindestens einem optischen Sensor die bearbeitete Fläche in der gesamten Arbeitsbreite des Vorsatzgerätes umfasst.

Weiterhin kann der mindestens eine optische Sensor das nicht von dem Vorsatzgerät aufgenommene Erntegut erfassen.

In bevorzugter Weiterbildung kann der mindestens eine Sensor die Spuren des Vorsatzgerätes, die er möglicherweise im Boden hinterlässt, erfassen. Hieraus lassen sich Informationen über die Arbeitsweise und Einstellung des Vorsatzgerätes ableiten.

Des Weiteren kann der mindestens eine optische Sensor Pflanzen, die nicht Bestandteil des Erntegutes sind, erfassen.

Gegenstand der Erfindung ist auch eine selbstfahrende Erntemaschine, bei der mindestens ein an der Erntemaschine angeordneter optischer Sensor die bearbeitete Fläche hinter dem Vorsatzgerät und vor den Reifen zumindest abschnittsweise optisch erfasst, wobei der mindestens eine optische Sensor die Stoppel erfasst und dass eine Datenauswertungseinheit daraus Rückschlüsse zieht, die Rückschlüsse auf die Stoppelqualität zulassen, und dass die ermittelten Informationen über den Zustand der bearbeiteten Fläche für das Betreiben der selbstfahrenden Erntemaschine verwendet werden.

Anhand der nachstehenden Beschreibung und den zugehörigen Figuren wird die Erfindung näher erläutert. Es zeigten:
- Fig. 1: eine schematische Darstellung einer selbstfahrenden Erntemaschine mit Sensoren, Verarbeitungs- und Darstellungseinrichtungen in Seitenansicht.
- Fig. 2: eine schematische Darstellung einer selbstfahrenden Erntemaschine mit Sensoren, Verarbeitungs- und Darstellungseinrichtungen in Draufsicht.

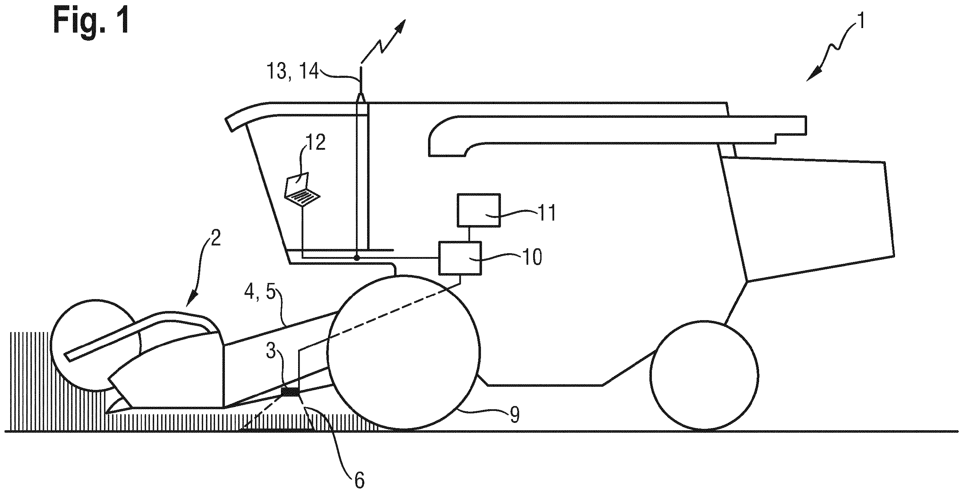

Die Figur 1 zeigt eine schematische Darstellung einer selbstfahrenden Erntemaschine 1 in Gestalt eines Mähdreschers mit einem Vorsatzgerät 2 in Form eines Schneidwerkes, welches über eine Aufnahmevorrichtung 4, in dem in Fig.1 dargestellten Fall des Mähdreschers über einen Einzugskanal 5, mit der Erntemaschine 1 in Verbindung steht. Zwischen dem Vorsatzgerät 2 und den Vorderreifen 9 der Erntemaschine 1 ist in erfindungsgemäßer Weise mindestens ein optischer Sensor 3 angeordnet, der einen Erfassungsbereich 6 aufweist, wie strichliniert angedeutet ist. Der Erfassungsbereich 6 des mindestens einen optischen Sensors 3 liegt hinter dem Vorsatzgerät 2 und vor den Vorderreifen 9 der selbstfahrenden Erntemaschine 1 und erstreckt sich im Wesentlichen über die Breite des Vorsatzgerätes 2. Die von dem mindestens einen Sensor 3 aufgenommenen Bilder werden an eine Datenauswertungseinheit 10 übertragen, welche aus den aufgenommenen Bildern verschiedene Parameter ermittelt. Diese werden beispielsweise an eine Steuervorrichtung 11 der selbstfahrenden Erntemaschine 1 weitergegeben und zur Steuerung zum Beispiel des Vorsatzgerätes 2 verwendet. Gleichzeitig oder auch alternativ werden die Daten einem Fahrer der Erntemaschine 1 auf einem Display 12 dargestellt, so dass der Fahrer entsprechend der auf dem Display 12 angezeigten Informationen reagieren kann. Durch das Verfahren können Daten der Bodenbeschaffenheit beziehungsweise des Gesundheitszustandes der geernteten Pflanzen bestimmt werden, indem den durch den optischen Sensor aufgenommenen Bildern die jeweilige Position bei der Aufnahme zugeordnet wird. Hierzu ist an der

Erntemaschine 1 eine Positionsortungsvorrichtung 14 angeordnet, welche kontinuierlich die Position der Erntemaschine 1 erfasst und an die Datenauswertungseinheit 10 überträgt. In der Datenauswertungseinheit 10 werden die Positionsdaten mit den positionsspezifischen Bildern verknüpft. So können die aus der Datenauswertung 10 gewonnenen Parameter zur Kartierung der bearbeiteten Fläche herangezogen werden. Eine Ergänzung beziehungsweise eine Alternative hierzu ist, wenn die aus der Datenauswertungseinheit 10 gewonnenen Parameter über ein drahtloses Kommunikationsmedium wie Funk 13 an eine externe Erfassungs- und/oder Auswertungsstelle weitergegeben werden.

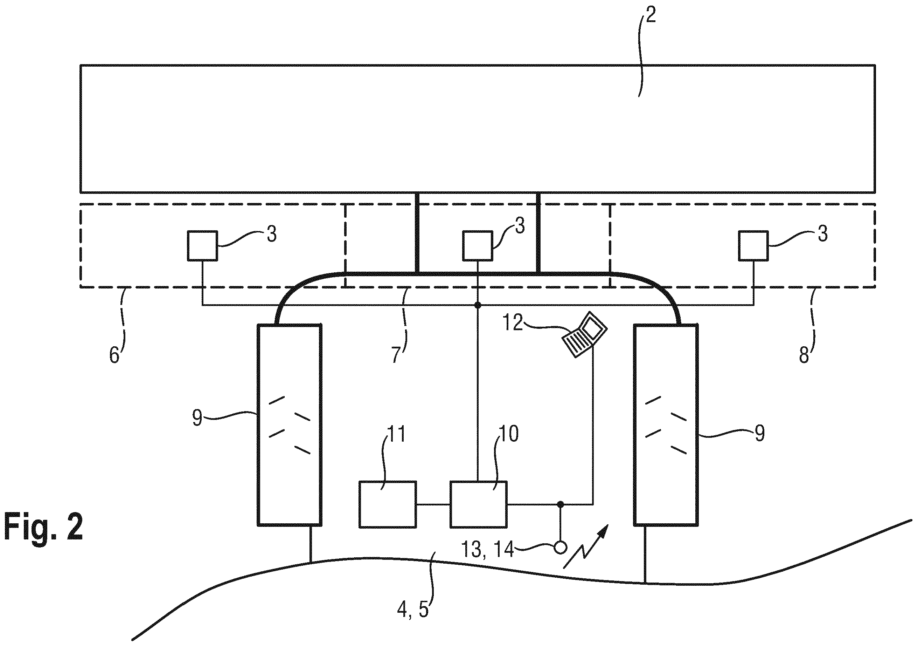

Die Figur 2 zeigt schematisiert den vorderen Teil der selbstfahrenden Erntemaschine 1 mit dem Vorsatzgerät 2 von oben. Auf Grund der Breite des Vorsatzgerätes 2 ist die selbstfahrende Erntemaschine 1 in dem dargestellten Ausführungsbeispiel mit drei optischen Sensoren 3 ausgestattet, welche ihrer Anzahl entsprechend drei Erfassungsbereiche 6, 7, 8 aufweisen. Die Sensoren 3 sind zwischen dem Vorsatzgerät 2 und den Vorderreifen 9 angebracht. Die Erfassungsbereiche 6, 7, 8 der Sensoren 3 sind in diesem Ausführungsbeispiel derart ausgelegt, dass im Wesentlichen die gesamte Breite des Vorsatzgerätes 2 abgedeckt ist. Damit wird die weitgehend gesamte abgeerntete Fläche von den Sensoren 3 erfasst. Die Anzahl der optischen Sensoren 3 richtet sich danach, dass die Summe der Erfassungsbereiche 6, 7, 8 im Wesentlichen die Breite des Vorsatzgerätes 2 abdecken soll. In Abhängigkeit von der Breite des Vorsatzgerätes 2 kann schon ein optischer Sensor 3 ausreichen; es kann auch vorkommen, dass zwei oder mehr optische Sensoren 3 vorzusehen sind, um die gesamte Arbeitsbreite der selbstfahrenden Erntemaschine 1 abzudecken zu können. Weiterhin können die Sensoren 3 derart angeordnet sein, dass die Erfassungsbereiche 6, 7, 8 einander abschnittsweise überlappen, um eine sichere Erfassung der abgeernteten Fläche zumindest über die Breite des Vorsatzgerätes 2 gewährleisten zu können.

Weiter ist es möglich, wenn das Raster der durch die optischen Sensoren 3 erfassten Fläche nicht so fein untergliedert sein muss, dass die Erfassungsbereiche 6, 7, 8 der optischen Sensoren 3 enger gefasst werden, also nicht die gesamte Arbeitsbreite des Erntebergungsvorsatzes 2 abdecken, oder dass mit einer geringeren Anzahl von optischen Sensoren 3 gearbeitet werden kann.

Anhand von Ausführungsbeispielen soll das Verfahren und die Vorrichtung zur Überwachung der bearbeiteten Flächen näher erläutert werden:
Ein erstes Ausführungsbeispiel betrifft die Minimierung von Erntegutverlusten des Vorsatzgerätes 2. Durch ungünstige Einstellungen des Vorsatzgerätes 2 und/oder Beschädigungen am Vorsatzgerät 2 kann es zu erhöhten Erntegutverlusten kommen, welche von dem Fahrer der selbstfahrenden Erntemaschine 1 von der Kabine aus nicht ohne weiteres wahrgenommen werden können.

Beeinflusst werden können die Erntegutverluste beispielsweise bei einem Mähdrescher durch die Position des Schneidewerktisches, die bei unterschiedlichen Erntegutarten variiert, die Kufenposition, die Haspeldrehzahl, die Haspelposition, die entsprechend der Schneidwerkstischposition variiert werden muss, um eine Kollision zu vermeiden, die Höhe des Schneidwerkes oder die Pflückspalteinstellung bei einem Maispflücker und dergleichen mehr. Aber auch Beschädigungen an dem Vorsatzgerät 2 wie beispielsweise ein Defekt des Ährenhebers oder der Bruch von Messerklinge oder Messerfinger erhöhen den Erntegutverlust.

Hilfreich ist es, wenn der mindestens eine optische Sensor 3 das nicht von dem Vorsatzgerät 2 aufgenommene, auf der abgeernteten Fläche liegende Erntegut erfasst, wenn es in einen der Erfassungsbereiche 6, 7, 8 gelangt. Die Datenauswertungseinheit 10 kann zum Beispiel durch Vergleich mit Referenzbildern das Erntegut erkennen und dem Fahrer auf dem Display 12 zur Anzeige bringen und dieses gegebenenfalls mit einer eingeblendeten Warnung hervorheben. Die Ergebnisse der Datenauswertungseinheit 10, die gewonnenen Parameter wie Verlustmenge und Zusammensetzung des Verlustes, können an die Steuereinheit 11 der selbstfahrenden Erntemaschine 1 weitergeleitet werden, die dann eine Optimierung der Einstellungen des Vorsatzgerätes 2 unter Berücksichtigung dieser Parameter vornimmt. Bei über die Breite des Vorsatzgerätes 2 begrenzt verteilt auftretenden Erntegutverlusten kann es sich um eine lokale Störung handeln, die auf nicht optimal angepasste Einstellungen des Vorsatzgerätes 2 oder aber auf Beschädigungen am Vorsatzgerät 2 zurückgehen können. Die Datenauswertungseinheit 10 erkennt das Auftreten der Störung und leitet eine entsprechende Information an die Steuervorrichtung 11 sowie an das Display 12 weiter. Je nach Schwere der Störung kann die Steuervorrichtung 11 oder der Fahrer den Betrieb des Vorsatzgerätes 2 einstellen, um einen weiteren Schaden an dem Vorsatzgerät 2 oder der selbstfahrenden Erntemaschine 1 zu verhindern.

Die durch die Datenauswertung ermittelte Menge an Verlustkörnern und Verlustähren kann flächenbezogen gespeichert werden, um daraus eine Verlustkennzahl zu ermitteln, die das Verhältnis von Verlusten je Flächeneinheit wiedergibt. Diese Werte können auch über Funk 13 an einen externen Auswerteempfänger weitergegeben werden.

Die Anwendung bei der Minimierung von Verlusten ist nicht wie in diesem Beispiel ausgeführt auf Erntegutbergungsvorsätze an Mähdreschern beschränkt, sondern lässt sich beispielsweise auch bei der Schwadaufnahme mit einem Pickup an einem Feldhäcksler einsetzen, um dort die Arbeitsvorgänge zu optimieren. Hierbei wird ermittelt, wie verlustfrei die Schwadaufnahme durch das Pickup erfolgt.

Bei einem zweiten Ausführungsbeispiel geht es um die Reduzierung der Trocknungskosten bei der Rapsernte. Mit der Wahl der Höhe des Vorsatzgerätes 2 kann die Erntegutfeuchtigkeit des abgeernteten Erntegutes beeinflusst werden. Bei der Rapsernte beispielsweise können im unteren Pflanzenbereich unreife Früchte und/oder grüne Stängel auftreten. Gelangen diese Pflanzenteile in die Erntemaschine 1, können die Erntegutfeuchtigkeit und dadurch bedingt die Trocknungskosten ansteigen.

Bestimmt die Datenauswertungseinheit 10 aus den von mindestens einem optischen Sensor 3 erfassten Daten die Feuchtigkeit beziehungsweise die Reife des oberen Teils von Stängeln, so kann die Steuervorrichtung 11 den Vorsatzgerät 2 in eine vorgegebene Sollhöhe bringen. Sind die Stängel beispielsweise im oberen Bereich zu grün, so wird der Vorsatzgerät 2 angehoben, um die Feuchtigkeit des Erntegutes zu verringern; sind die Stängel trockener als der Sollwert, so kann, wenn nicht andere Parameter wie Mindestabstand vom Boden dagegen sprechen, der Vorsatzgerät 2 abgesenkt werden, um eine größere Erntegutmenge zu bergen.

Ein weiteres Ausführungsbeispiel betrifft das Erkennen und Auswerten von Vorschädigungen aus vorangegangenen Ernten, um diese in entsprechender Weise berücksichtigen zu können. Ein genauer Grund für Ertrags- und Qualitätsschäden ist oft nur am Boden und im Wurzelbereich der Pflanze zu finden. Daher ist es vorteilhaft, Schädigungen im Stoppelbereich des Erntegutes zu untersuchen. Diese Untersuchung kann auf der selbstfahrenden Erntemaschine 1 erfolgen, wenn der mindestens eine optische Sensor 3 die Stoppeln erfasst und die Datenauswertungseinheit 10 die Stoppellänge, die Stoppeldichte, den Halmbruch oder die Farbe der Stoppel in ihrem unteren Bereich bestimmt. Die Datenauswertungseinheit 10 kann bei den von dem mindestens einen optischen Sensor 3 erfassten Daten nach einer Schwarzfärbung im unteren Bereich der Stoppeln suchen, was auf eine "Schwarzbeinigkeit" hindeutet. Sind die unteren Stängelknoten violett-schwärzlich gefärbt, deutet dies auf ein "Stängelfusarium" hin. Liegt das Stroh wirr, in nesterartigen Lagen auf dem Boden, so handelt es sich hierbei um "Halmbruch". Die von der Datenauswertungseinheit 10 bereitgestellten Daten werden Zusammen mit den von der Positionsortungsvorrichtung 14 bereitgestellten Positionsdaten verknüpft, so dass eine Zustandskarte der abgeernteten Fläche erstellt werden kann. Diese Daten können für eine spätere Auswertung gespeichert werden oder mittels der Funkübertragung 13 an eine externe Auswerteeinheit übermittelt werden. Hiermit werden dem Landwirt Informationen an die Hand gegeben mit denen er über eine zukünftige Fruchtfolge entscheiden kann.

Die Datenauswertungseinheit 10 kann die von den Sensoren 3 aufgenommenen Daten auch auf Wildschäden untersuchen.

In einem vierten Ausführungsbeispiel wird die Reduzierung des Sandanteils bei der Maisernte beschrieben. Bei der Maisernte mit einem selbstfahrenden Feldhäcksler wird angestrebt, die Maispflanze so nah wie möglich oberhalb der Oberfläche des Bodens abzuschneiden. Der Nachteil dabei ist, dass dadurch mehr Sand von dem Vorsatzgerät 2 aufgenommen wird, da im unteren Pflanzenbereich der Sandanteil an der Pflanze erhöht auftreten kann. Es ist daher anzustreben, die Schnitthöhe nach dem Sandanteil zu regeln. Hierzu erfasst die Datenauswertung 10 aus den von dem mindestens einen optischen Sensor 3 erfassten Daten den Sandanteil im oberen Bereich der Stoppeln. Stellt die Datenauswertung 10 an den Maisstoppeln einen überhöhten Sandanteil fest, hebt die Steuerungsvorrichtung 11 den Vorsatzgerät 2 an, und verringert dadurch den Sandanteil im Erntegut. Wird von der Datenauswertung 10 kein Sand festgestellt, so kann der Vorsatzgerät 2 weiter abgesenkt werden, um mehr Erntegut zu gewinnen.

Ein fünftes Ausführungsbeispiel behandelt die Minimierung der Stoppel- und Bodenbearbeitung. Bei einer zu großen Stoppellänge müssen die zu langen Stoppeln durch einen extra Arbeitsgang nachgearbeitet werden. Mit Hilfe einer Kartierung der Stoppellänge kann eine gezielte Stoppelbearbeitung vorgenommen werden. So kann es notwendig sein, nur da, wo Lagergetreide nicht von dem Vorsatzgerät 2 aufgenommen wurde, eine Nachbearbeitung vorzunehmen.

Anhand einer Farbselektion kann der mindestens eine optische Sensor 3 so ausgelegt werden, dass er Pflanzen, die nicht zum Erntegut gehören, erfasst und die Daten mittels der Datenauswertungseinheit 10 sowie der Positionsortungsvorrichtung 14 kartiert werden. Dort wo Unkräuter zwischen den Stoppeln detektiert worden sind, kann eine gezielte Bekämpfung derselben vorgenommen werden.

Stellt die Datenauswertungseinheit 10 anhand der von den optischen Sensoren 3 gewonnenen Daten fest, dass keine Stoppeln vorhanden sind, kann es je nach Gegebenheit auf einen Wasserschaden beziehungsweise auf zu große Trockenheit hindeuten, die das Ausbilden der Pflanzen verhindert hat. Es kann wichtig sein, an den gefundenen Stellen die Entwässerung bzw. die Bewässerung zu überprüfen.

Ein weiteres Ausführungsbeispiel stellt auf die optische Erfassung der Spuren eines Vorsatzgerätes 2 ab, die dieses während des Erntevorganges auf der abgeernteten Fläche hinterlässt. Wie oben an verschiedenen Stellen schon dargelegt, ist es optimal, möglichst viel Erntegut mit dem Vorsatzgerät 2 aufzunehmen, indem man möglichst viel von der Pflanze erntet. Das bedeutet, dass in solchen Fällen der Vorsatzgerät 2 tief über den Boden geführt wird. Der der Vorsatzgerät 2 kann bei einem zu geringen Abstand zum Boden diesen berühren und dabei Spuren, wie Abdrücke oder Schleifspuren hinterlassen. Die Vorrichtung ist so eingerichtet, dass der mindestens eine Sensor 3 die Spuren der Erntebergungsvorsatzes 2, die er möglicherweise im Boden hinterlässt, erfasst. Die Datenauswertung 10 kann aus den von mindestens einem optischen Sensor 3 gelieferten Daten nach Spuren des Vorsatzgerätes 2 im Boden suchen, damit gegebenenfalls die Steuervorrichtung 11 den Erntebergungsvorsatz 2 anhebt, um einen Schaden an dem Erntebergungsvorsatz 2 zu verhindern.

### Bezugszeichenliste

- 1: selbstfahrende Erntemaschine
- 2: Vorsatzgerät
- 3: optischer Sensor
- 4: Aufnahmevorrichtung
- 5: Einzugskanal
- 6: Erfassungsbereich eines Sensors
- 7: Erfassungsbereich eines weiteren Sensors
- 8: Erfassungsbereich eines dritten Sensors
- 9: Vorderreifen
- 10: Datenauswertung
- 11: Steuervorrichtung der selbstfahrenden Erntemaschine
- 12: Display für den Fahrer
- 13: Funkverbindung zu einem externen Empfänger
- 14: Positionsortungsvorrichtung

## Patentansprüche

1. Verfahren zum Betreiben einer selbstfahrenden Erntemaschine (1), die ein Vorsatzgerät (2), mit dem eine landwirtschaftlich genutzte Fläche bearbeitet wird, sowie mindestens einen optischen Sensor (3), mit dem die bearbeitete Fläche erfasst wird, aufweist, **dadurch gekennzeichnet, dass** die bearbeitete Fläche unmittelbar hinter dem Vorsatzgerät (2) und vor den Reifen (9) zumindest abschnittsweise optisch erfasst wird, dass Signale bereitgestellt werden, die die optisch erfasste Fläche repräsentieren, und dass die Signale einer Datenauswertung unterzogen werden, durch welche Rückschlüsse auf die Stoppelqualität im Stoppelbereich des Erntegutes der bearbeiteten Fläche gezogen werden.

2. Verfahren nach Anspruch 1, **dadurch gekennzeichnet, dass** die ermittelten Informationen über die bearbeitete Fläche für das Betreiben der selbstfahrenden Erntemaschine (1) herangezogen werden.

3. Verfahren nach einem der vorangegangenen Ansprüche, **dadurch gekennzeichnet, dass** die ermittelten Informationen zur Optimierung der Einstellungen des Vorsatzgerätes (2) herangezogen werden.

4. Verfahren nach einem der vorangegangenen Ansprüche, **dadurch gekennzeichnet, dass** die aus der Datenauswertung (10) bestimmten Parameter für eine spätere Auswertung gespeichert werden.

5. Verfahren nach einem der vorangegangenen Ansprüche, **dadurch gekennzeichnet, dass** die aus der Datenauswertung (10) gewonnenen Parameter zur Kartierung der bearbeiteten Fläche herangezogen werden.

6. Verfahren nach einem der vorangegangenen Ansprüche, **dadurch gekennzeichnet, dass** die aus der Datenauswertung (10) gewonnenen Parameter über Funk (13) an eine externe Erfassungs- und/oder Auswertestelle weitergegeben werden.

7. Vorrichtung an einer selbstfahrenden Erntemaschine (1) zur optischen Bilderfassung und Datenanalyse zur Durchführung des Verfahrens nach einem der Ansprüche 1 bis 6, umfassend:
- mindestens einen optischen Sensor (3), der die von einem Vorsatzgerät (2) bearbeitete Fläche unmittelbar hinter dem Vorsatzgerät (2) und vor den Reifen (9) zumindest teilweise optisch erfasst, wobei der mindestens eine optische Sensor (3) die Stoppel erfasst, und
- eine Datenanalyseeinrichtung (10), **dadurch gekennzeichnet, dass** die aus den von dem mindestens einen optischen Sensor (3) erfassten Informationen den Zustand der bearbeiteten Fläche repräsentierende Parameter errechnet, die Rückschlüsse auf die Stoppelqualität zulassen.

8. Vorrichtung nach Anspruch 7, **dadurch gekennzeichnet dass**, der mindestens eine optisch Sensor eine Kamera ist.

9. Vorrichtung nach einem der Ansprüche 7 bis 8, **dadurch gekennzeichnet, dass** der Erfassungsbereich (6, 7, 8) des mindestens einen optischen Sensors (3) die bearbeitete Fläche in der gesamten Arbeitsbreite des Vorsatzgerätes (2) umfasst.

10. Vorrichtung nach einem der Ansprüche 7 bis 9, **dadurch gekennzeichnet, dass** der mindestens eine optische Sensor (3) das nicht von dem Vorsatzgerät (2) aufgenommene Erntegut erfasst.

11. Vorrichtung nach einem der Ansprüche 7 bis 10, **dadurch gekennzeichnet, dass** der mindestens eine Sensor (3) die Spuren des Vorsatzgerätes (2), die er möglicherweise im Boden hinterlässt, erfasst.

12. Vorrichtung nach einem der Ansprüche 7 bis 11, **dadurch gekennzeichnet, dass** der mindestens eine optische Sensor (3) Pflanzen, die nicht Bestandteil des Erntegutes sind, erfasst.

13. Selbstfahrende Erntemaschine (1) mit einem Vorsatzgerät (2), wobei mindestens ein an der Erntemaschine (1) angeordneter optischer Sensor (3) die bearbeitete Fläche hinter dem Vorsatzgerät (2) und vor den Reifen (9) zumindest abschnittsweise optisch erfasst, **dadurch gekennzeichnet, dass** der mindestens eine optische Sensor (3) die Stoppel erfasst, dass eine Datenauswertung (10) daraus Rückschlüsse zieht, die Rückschlüsse auf die Stoppelqualität zulassen, und dass die ermittelten Informationen über den Zustand der bearbeiteten Fläche für das Betreiben der selbstfahrenden Erntemaschine (1) verwendet werden.

## Claims

1. A method of operating a self-propelled harvester (1) which has a front attachment (2) with which a surface used in agriculture is processed, and at least one optical sensor (3) with which the processed surface is detected, **characterised in that** the processed surface is optically detected at least portion-wise directly behind the front attachment (2) and in front of the tyres (9), that signals are provided which represent the optically detected surface, and that the signals are subjected to data evaluation, by which conclusions are drawn about the stubble quality in the stubble region of the crop material of the processed surface.

2. A method according to claim 1 **characterised in that** the ascertained information about the processed surface is put to use for operation of the self-propelled harvester (1).

3. A method according to one of the preceding claims **characterised in that** the ascertained information is put to use for optimising the settings of the front attachment (2).

4. A method according to one of the preceding claims **characterised in that** the parameters determined from the data evaluation operation (10) are stored for later evaluation.

5. A method according to one of the preceding claims **characterised in that** the parameters obtained from the data evaluation operation (10) are put to use for mapping of the processed surface.

6. A method according to one of the preceding claims **characterised in that** the parameters obtained from the data evaluation operation (10) are transmitted by way of radio (13) to an external detection and/or evaluation location.

7. Apparatus on a self-propelled harvester (1) for optical image detection and data analysis for carrying out the method according to one of claims 1 to 6 including:
- at least one optical sensor (3) which at least partially optically detects the surface processed by a front attachment (2) directly behind the front attachment (2) and in front of the tyres (9), wherein the at least one optical sensor (3) detects the stubble, and
- a data analysis device (10) **characterised in that** from the information detected by the at least one optical sensor (3) it computes parameters which represent the state of the processed surface and which allow conclusions about the stubble quality.

8. Apparatus according to claim 7 **characterised in that** the at least one optical sensor is a camera.

9. Apparatus according to one of claims 7 and 8 **characterised in that** the detection region (6, 7, 8) of the at least one optical sensor (3) includes the processed surface in the entire working width of the front attachment (2).

10. Apparatus according to one of claims 7 to 9 **characterised in that** the at least one optical sensor (3) detects the crop material which is not picked up by the front attachment (2).

11. Apparatus according to one of claims 7 to 10 **characterised in that** the at least one sensor (3) detects the tracks of the front attachment (2), which it possibly leaves behind in the ground.

12. Apparatus according to one of claims 7 to 11 **characterised in that** the at least one optical sensor (3) detects plants which are not a component part of the crop material.

13. A self-propelled harvester (1) having a front attachment (2), wherein at least one optical sensor (3) arranged on the harvester (1) at least portion-wise optically detects the processed surface behind the front attachment (2) and in front of the tyres (9), **characterised in that** the at least one optical sensor (3) detects the stubble, that a data evaluation means (10) draws therefrom conclusions which allow conclusions about the stubble quality, and that the ascertained information about the state of the processed surface is used for operation of the self-propelled harvester (1).

## Revendications

1. Procédé de fonctionnement d'une machine de récolte automotrice (1) qui comporte un outil frontal (2) avec lequel une surface utilisée à des fins agricoles est travaillée, ainsi qu'au moins un capteur optique (3) avec lequel la surface travaillée est détectée, **caractérisé en ce que** la surface travaillée est détectée optiquement, au moins dans certaines zones, directement derrière l'outil frontal (2) et devant les pneus (9), **en ce que** sont fournis des signaux qui représentent la surface détectée optiquement, et **en ce que** les signaux sont soumis à une évaluation de données qui permet de tirer des conclusions sur la qualité des chaumes dans la zone de chaumes du produit de récolte de la surface travaillée.

2. Procédé selon la revendication 1, **caractérisé en ce que** les informations déterminées sur la surface travaillée sont utilisées pour le fonctionnement de la machine de récolte automotrice (1).

3. Procédé selon l'une des revendications précédentes, **caractérisé en ce que** les informations déterminées sont utilisées pour optimiser les réglages de l'outil frontal (2).

4. Procédé selon l'une des revendications précédentes, **caractérisé en ce que** les paramètres déterminés à partir de l'évaluation de données (10) sont mémorisés pour une évaluation ultérieure.

5. Procédé selon l'une des revendications précédentes, **caractérisé en ce que** les paramètres obtenus à partir de l'évaluation de données (10) sont utilisés pour cartographier la surface travaillée.

6. Procédé selon l'une des revendications précédentes, **caractérisé en ce que** les paramètres obtenus à partir de l'évaluation de données (10) sont transmis par radio (13) à un service d'acquisition et/ou d'évaluation externe.

7. Dispositif sur une machine de récolte automotrice (1) pour l'acquisition optique d'images et l'analyse de données afin de mettre en oeuvre le procédé selon l'une des revendications 1 à 6, comprenant :
- au moins un capteur optique (3) qui détecte optiquement, au moins dans certaines zones, la surface travaillée par un outil frontal (2) directement derrière l'outil frontal (2) et devant les pneus (9), ledit au moins un capteur optique (3) détectant les chaumes, et
- un dispositif d'analyse de données (10),
**caractérisé en ce que** le dispositif d'analyse de données (10) calcule, à partir des informations détectées par ledit au moins un capteur optique (3), des paramètres qui représentent l'état de la surface travaillée et qui permettent de tirer des conclusions sur la qualité des chaumes.

8. Dispositif selon la revendication 7, **caractérisé en ce que** ledit au moins un capteur optique est une caméra.

9. Dispositif selon l'une des revendications 7 à 8, **caractérisé en ce que** la zone de détection (6, 7, 8) dudit au moins un capteur optique (3) comprend la surface travaillée sur la largeur de travail totale de l'outil frontal (2).

10. Dispositif selon l'une des revendications 7 à 9, **caractérisé en ce que** ledit au moins un capteur optique (3) détecte le produit de récolte non ramassé par l'outil frontal (2).

11. Dispositif selon l'une des revendications 7 à 10, **caractérisé en ce que** ledit au moins un capteur optique (3) détecte les traces que l'outil frontal (2) laisse éventuellement dans le sol.

12. Dispositif selon l'une des revendications 7 à 11, **caractérisé en ce que** ledit au moins un capteur optique (3) détecte les végétaux qui ne font pas partie du produit de récolte.

13. Machine de récolte automotrice (1) dotée d'un outil frontal (2), dans laquelle au moins un capteur optique (3) disposé sur la machine de récolte (1) détecte optiquement, au moins dans certaines zones, la surface travaillée derrière l'outil frontal (2) et devant les pneus (9), **caractérisée en ce que** ledit au moins un capteur optique (3) détecte les chaumes, **en ce qu'**une évaluation de données (10) en tire des conclusions sur la qualité des chaumes, et **en ce que** les informations déterminées sur l'état de la surface travaillée sont utilisées pour le fonctionnement de la machine de récolte automotrice (1).
